# EUROPEAN PATENT APPLICATION

(11) **EP 0 856 939 A1**
(43) Date of publication of application: **05.08.1998**
(21) Application number: 98101826.0
(22) Date of filing: 03.02.1998
(51) Int. Cl.: H02P 8/34, H02P 8/20

(54) **Rotation driving system improved in detection of a rotation angle of a stepping motor**

(30) Priority: 04.02.1997 JP 21672/97
(71) Applicant: Sanden Corporation, Isesaki-shi, Gunma 372-8502 (JP)
(72) Inventor: Ohsato, Kazumi, Isesaki-shi, Gunma 372 (JP); Kuribara, Tadashi, Isesaki-shi, Gunma 372 (JP); Hoshino, Seiichi, Isesaki-shi, Gunma 372 (JP)
(74) Representative: Prüfer, Lutz H., Dipl.-Phys.

(57) **Abstract**

For monitoring a stepping motor (2) supplied with a drive signal of pulses through a signal supplying line (11a) for producing rotation force in accordance with each of the pulses, a switch (7) is connected to the signal supplying line to make the signal supplying line be opened whenever the switch is operated in accordance with rotation of a rotary member rotated in response to the rotation force. When the signal supplying line is opened, a line monitoring circuit (8) produces a detection signal. By the use of the detection signal, a control circuit (9) determines a rotation angle of the rotary member. Within the rotation angle, the control circuit counts the pulses to judge with reference to the number of the pulses whether or not the stepping motor is normal.

## Description

### Background of the Invention:

This invention relates to a rotation driving system for driving an airway damper for use in an automobile air conditioner or the like.

Generally, a driving system for driving an airway damper in an automobile air conditioner comprises a stepping motor for controlling a rotation angle of the damper in response to a pulse signal. Supplied with a drive signal of a desired number of pulses, the stepping motor controls the damper so that an airway of the air conditioner has a desired aperture or opening rate.

In case where the stepping motor is used, it is assumed that an excessive load imposed upon an output shaft results in a so-called out-of-step operation which is an inconsistency between the number of supplied pulses and the rotation angle. In this event, the rotation angle of the damper can not be accurately controlled.

In order to detect abnormal rotation of the motor, proposal is made of a detecting arrangement for detecting a rotation angle of the motor. Specifically, a conductive contact is formed at a predetermined rotating point of a rotary member, such as a gear, which is rotated together with the stepping motor. On the other hand, a substrate having a conductive portion to be contacted with the contact is disposed at a predetermined location. When the contact being rotated is brought into mechanical contact with the conductive portion of the substrate, electrical connection is achieved so that establishment of such mechanical contact is electrically detected. Thus, a rotating angle of the stepping motor is detected to judge whether the rotation of the stepping motor is normal or abnormal.

However, the detecting arrangement mentioned above has a complicated structure including the contact, the substrate, and interconnection wires connected thereto. This results in an increase in production cost.

### Summary of the Invention:

It is therefore an object of this invention to provide a rotation driving system which has a simple structure and is capable of reliably detecting abnormal rotation of a stepping motor.

Other objects of this invention will become clear as the description proceeds.

A rotation driving system to which this invention is applicable comprises a stepping motor supplied with a drive signal of pulses for producing rotation force in accordance with each of the pulses, a signal supplying line connected to the stepping motor for supplying the drive signal to the stepping motor, a rotary member connected to the stepping motor for carrying out each of forward rotation and backward rotation in response to the rotation force, and monitoring means for monitoring the stepping motor to produce a monitoring result signal. According to this invention, the monitoring means comprises specifying means for specifying a specific position of the rotary member, a switch connected to the signal supplying line and operatively coupled to the rotary member for detecting the specific position with the forward and the backward rotations to make the signal supplying line be opened whenever the switch detects the specific position, line monitoring means connected to the signal supplying line for producing a detection signal when the signal supplying line is opened, angle determining means connected to the line monitoring means for determining a rotation angle of the rotary member by the use of the detection signal, and judging means connected to the angle determining means and supplied with the drive signal for counting the pulses within the rotation angle to judge with reference to the number of the pulses whether or not the stepping motor is normal.

### Brief Description of the Drawing:

Fig. 1 is a schematic side-sectional view of a rotation driving system according to an embodiment of this invention;
Fig. 2 is a schematic plan view of the rotation driving system illustrated in Fig. 1;
Fig. 3 is a schematic exploded perspective view of the rotation driving system illustrated in Fig. 1;
Fig. 4 is a circuit diagram of the rotation driving system illustrated in Fig. 1; and
Fig. 5 is a flow chart for describing an operation of a control circuit included in the rotation driving system illustrated in Fig. 4.

### Description of the Preferred Embodiment:

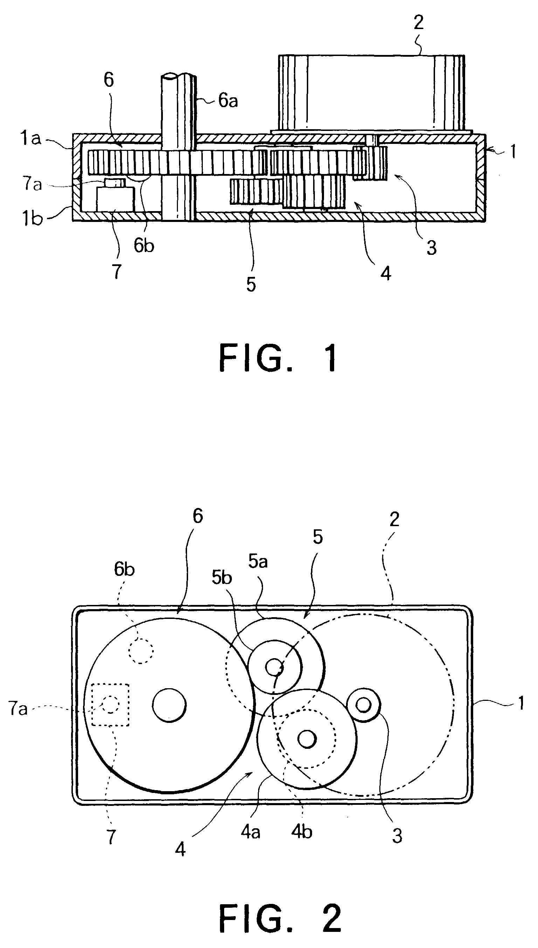

Referring to Figs. 1 through 4, description will be made as regards a rotation driving system according to an embodiment of this invention.

In the manner which will be described below in detail, the rotation driving system comprises a case 1 forming a main body of the system, a stepping motor 2 serving as a drive source, first through fourth gears 3 through 6 rotated by the stepping motor 2, a switch 7 for detecting a predetermined rotating position of the fourth gear 6, a line monitoring circuit 8 for monitoring the switch 7 to produce a detection signal in response to a switching operation of the switch 7, a control circuit 9 for judging whether the rotation of the stepping motor 2 is normal or abnormal, and a motor drive circuit 10 for producing, as a drive signal, a succession of pulses to supply the drive signal to the stepping motor 2.

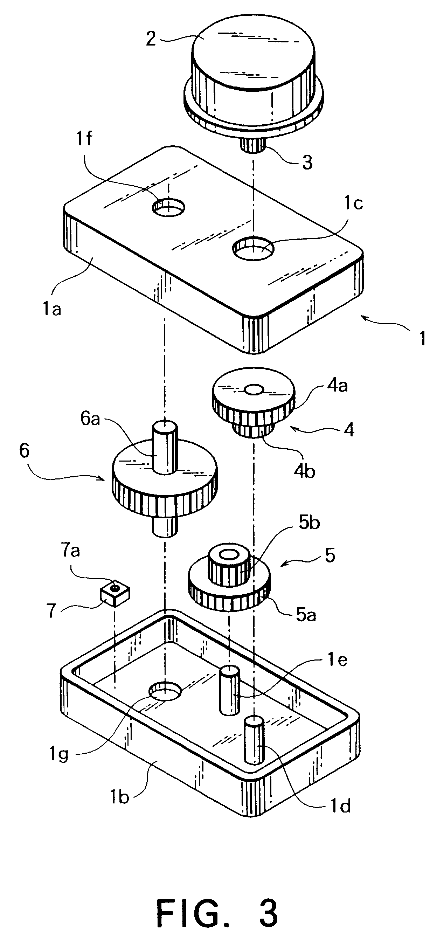

The case 1 comprises a pair of upper and lower case members 1a and 1b coupled to each other, as illustrated in Figs. 1 and 3. The stepping motor 2 is attached to an upper surface of the case 1 with its rotary shaft inserted into the case 1 through a hole 1c formed in the upper case member 1a.

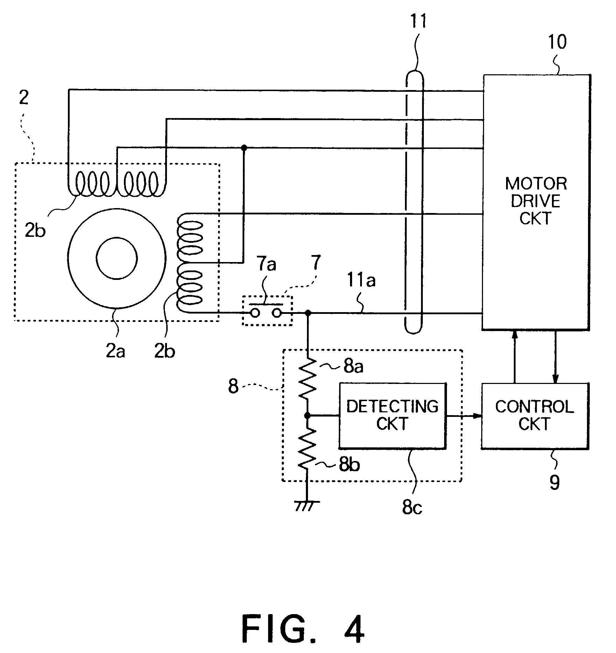

As seen from Fig. 4, the stepping motor 2 comprises a rotor 2a and two coils 2b around the rotor 2a. The coils 2b are connected to the motor drive circuit 10 through a plurality of signal supplying lines 11. Supplied from the motor drive circuit 10 through the signal supplying lines 11 with the drive signal of a desired number of the pulses, the stepping motor 2 produces rotation force of the rotor 2a in accordance with each of the pulses to carry out forward rotation and backward rotation in forward and backward rotating directions, respectively.

Referring to Fig. 2 together with Figs. 1 and 3, each of the gears 3 through 6 comprises a spur gear which is well known in the art and therefore is schematically depicted in the drawing. The gears 3 through 6 are housed in the case 1. The first gear 3 is attached to the rotary shaft of the stepping motor 2 to be rotated together with the rotary shaft of the stepping motor 2. The second gear 4 comprises a large diameter portion 4a and a small diameter portion 4b integrally formed and is rotatably supported by a support shaft 1d fixed to the case 1. The third gear 5 has a large diameter portion 5a and a small diameter portion 5b integrally formed and is rotatably supported by a support shaft 1e fixed to the case 1. The fourth gear 6 has a rotary shaft 6a as an output shaft of the system. The rotary shaft 6a has upper and lower ends rotatably supported by upper and lower holes 1f and 1g formed in the upper and the lower surfaces of the case 1, i.e., in the upper and the lower case members 1a and 1b, respectively. The upper end of the rotary shaft 6a protrudes upward through the upper hole 1f on the upper surface of the case 1.

As best shown in Fig. 2, the first gear 3 is engaged with the large-diameter portion 4a of the second gear 4. The small-diameter portion 4b of the second gear 4 is engaged with the large-diameter portion 5a of the third gear 5. The small-diameter portion 5b of the third gear 5 is engaged with the fourth gear 6. Thus, rotation speed of the stepping motor 2 is reduced via the first through the fourth gears 3 through 6 to be outputted from the rotary shaft 6a of the fourth gear 6. As seen from Figs. 1 and 2, the fourth gear 6 has a protrusion 6b which is formed at the specific position of the fourth gear 6 to operate the switch 7 with the rotation of the fourth gear 6. The protrusion 6b will be referred to as a specifying arrangement for specifying a specific position of the fourth gear 6.

The switch 7 comprises a microswitch and has a pressed portion 7a formed on its outer surface. The pressed portion 7a is located on a circumferential orbit of rotation of the protrusion 6b so as to be pressed by the protrusion 6b of the fourth gear 6 being rotated. Whenever the pressed portion 7a is pressed by the protrusion 6b, the switch 7 is turned off. The fourth gear 6 is referred to as a rotary member.

The switch 7 is connected to a selected line 11a of the signal supplying lines 11 and detects the specific position with the forward and the backward rotations to make the selected line 11a be opened whenever the switch 7 is turned off.

The line monitoring circuit 8 is for monitoring the selected line 11a to produce the detection signal when the selected line 11a is opened by the switch 7 and comprises a pair of resistors 8a and 8b and a detecting circuit 8c. The resistors 8a and 8b are connected in cascade to each other between the selected line 11a and ground. The detecting circuit 8c is connected to a junction which is between the resistors 8a and 8b. The junction has an electric potential varying when the selected line 11a is opened. The detecting circuit 8c produces the detection signal in response to the electric potential at the junction. More particularly, the detecting circuit 8c monitors a resistor-side divided voltage as the electric potential at the junction to produce the detection signal when the divided voltage has a change between voltage levels.

The control circuit 9 comprises a microcomputer and is connected to the detecting circuit 8c and the motor drive circuit 10, as illustrated in Fig. 4. In the manner which will later be described in detail, the control circuit 9 has an operation for judging whether the rotation of the stepping motor 2 is normal or abnormal with reference to the number of pulses of the drive signal supplied to the stepping motor 2 and detection of the operation of the switch 7.

The rotation driving system of the above-mentioned structure can be used, for example, to drive a damper (not shown) disposed in an airway duct of an automobile air conditioner in the manner known in the art. The rotary shaft 6a of the fourth gear 6 is connected to a rotation shaft of the damper. By rotating the stepping motor 2, the damper is controllably rotated to provide a desired aperture of the airway duct. The control circuit 9 is operated in the following manner to judge whether the rotation of the stepping motor 2 is normal or abnormal.

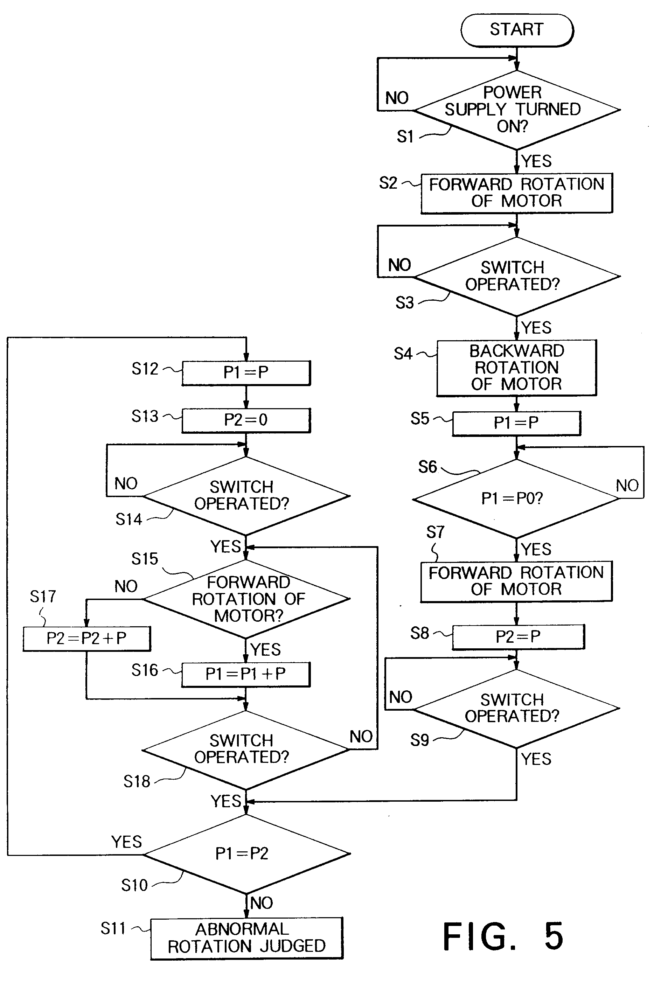

Referring to Fig. 5 in addition to Figs. 1 through 4, the description will be directed to the operation of the control circuit 9. It will be assumed here that the switch 7 is operated when the damper is fully opened.

When a power supply is turned on at a step S1, an initial check of operation of the stepping motor 2 is started. Specifically, the stepping motor 2 is supplied with the drive signal of the pulses and is rotated in the forward rotating direction (step S2).

At a step S3, judgement is made as regards whether or not the specific position of the fourth gear 6 is detected by the switch 7. When the specific position of the fourth gear 6 is detected by the switch 7, the local detecting circuit 8c produces the detection signal in response to the change of the electric potential at the junction between the resistors 8a an 8b. Responsive to the detection signal, the control circuit 9 controls the motor drive circuit 10 to make the stepping motor 2 be rotated in the backward rotating direction (step S4). During this event, the fourth gear 6 carries out the backward rotation. Simultaneously, a counting operation is started as regards a pulse count P representative of the number of the pulses supplied to the stepping motor 2 (step S5). More particularly, the pulse count P is set as a first pulse count P1 for the backward rotation. In this event, the control circuit 9 is referred to as a first counting arrangement and produces a first count value.

At a step S6, judgement is made about whether or not the first pulse count P1 is equal to a predetermined count P0 which is representative of a full close of the damper and corresponds to the above-mentioned time interval. Only when the first pulse count P1 becomes equal to the predetermined count P0, the step S6 is followed by a step S7 at which the control circuit 9 controls the motor drive circuit 10 to make the stepping motor 2 be rotated in the forward rotating direction. In other words, the backward rotation of the stepping motor 2 is carried out within a first rotation angle corresponding to a time interval which is between the detection signal and a selected one of the pulses. In this event, the control circuit 9 will be referred to as an angle determining arrangement for determining a rotation angle of the fourth gear 6.

When the stepping motor 2 is rotated in the forward rotation direction, the fourth gear 6 carries out the forward rotation. Simultaneously, the pulse count P is set as a second pulse count P2 for the forward rotation (step S8). In this event, the control circuit 9 is referred to as a second counting arrangement and produces a second count value. During carrying out each of the steps S4 and S7, the control circuit 9 controls the motor drive circuit 10 to make the stepping motor 2 continuously carry out each of the forward rotation and the backward rotation within the first rotation angle. In this event, the control circuit 9 will be referred to as a direction control arrangement.

The step S8 is followed by a step S9 at which the specific position of the fourth gear 6 is detected by the switch 7 again. When the specific position of the fourth gear 6 is detected by the switch 7, the detecting circuit 8c produces the detection signal.

Responsive to the detection signal, the control circuit 9 carries out judgement about whether or not the first pulse count P1 is equal to the second pulse count P2 (step S10). In other words, the control circuit 9 judges coincidence or incoincidence between the first and the second count value. On carrying out the step S10, the control circuit 9 is referred to as a judging arrangement.

When the first and the second pulse counts P1 and P2 are coincident with each other, it is judged that the rotation of the stepping motor 2 is normal. If the first and the second pulse counts P1 and P2 are not coincident with each other due to an out-of-step operation of the stepping motor 2, the step S10 proceeds to a step S11 at which the control circuit 9 produces a monitoring result signal to represent that the rotation of the stepping motor 2 is abnormal.

When the above-mentioned initial check results in judgement in the step S10 that the rotation of the stepping motor 2 is normal, each of the first and the second pulse counts P1 and P2 is reset into an initial value of zero (steps S12 and S13).

Next, the description will be directed to a case where the air conditioner is actually operated and where the stepping motor 2 is rotated under control of another control circuit of the air conditioner. When the switch 7 detects the specific position of the fourth gear 6 (step S14), the detecting circuit 8c produces the detection signal. Responsive to the detection signal, the control circuit 9 carries out judgement about whether or not the stepping motor 2 is rotated in the forward rotating direction (step S15).

If the stepping motor 2 is rotated in the forward rotating direction, the number of the pulses supplied to the stepping motor 2 is added to the first pulse count P1 for the forward rotation (step S16). On carrying out the step S16, the control circuit 9 is referred to as the first counting arrangement and produces the first count value.

If the stepping motor 2 is rotated in the backward rotating direction in the step S15, the number of the pulses supplied to the stepping motor 2 is added to the second pulse count P2 for the backward rotation (step S17). On carrying out the step S17, the control circuit 9 is referred to as the second counting arrangement and produces the second count value.

Each of the steps S16 and S17 is followed by a step S18 at which the control circuit 9 carries out judgement about whether or not the switch 7 is operated. When the switch 7 is not operated, the step S18 returns to the step S15. During carrying out the steps S15, S16, S17, and S18, the control circuit 9 controls the motor drive circuit 10 to make the stepping motor 2 mixedly carry out the forward rotation and the backward rotation within a second rotation angle corresponding to a time interval which is between appearances of the detection signal. In this event, the control circuit 9 will be referred to as each of the direction control arrangement and the determining arrangement.

Following the rotation of the damper, the stepping motor 2 performs each of the forward rotation and the backward rotation in correspondence to a given number of pulses. When the switch 7 again detects the specific position of the fourth gear 6 (step S18), the control circuit 9 carries out judgement about whether or not the first and the second pulse counts P1 and P2 are coincident with each other (step S10). Upon coincidence between the first and the second pulse counts P1 and P2, it is judged that the rotation of the stepping motor 2 is normal. Then, the operation returns to the step S12. If the first and the second pulse counts P1 and P2 are not coincident with each other in the step S10 due to the out-of-step operation of the stepping motor 2, the step S10 proceeds to the step 11 at which the control circuit 9 produces the monitoring result signal to represent that the rotation of the stepping motor 2 is abnormal.

In the rotation driving system, judgement is made about coincidence or incoincidence between the number of pulses supplied to the stepping motor 2 with respect to one rotating direction after the switch 7 detects the specific position of the fourth gear 6 and the number of pulses supplied to the stepping motor 2 before the switch 7 detects the specific position of the fourth gear 6 with respect to the other rotating direction reverse to the one rotating direction. Thus, the abnormal rotation of the stepping motor 2 can be reliably detected with a simple structure. It is therefore possible to reduce the production cost.

As described above, the switch 7 is incorporated in the selected line 11a of the signal supplying lines 11 to detect the change in the electric signal of the selected line 11a in response to the operation of the switch 7. Therefore, any additional interconnection wire need not be connected to the switch to further simplify the structure.

In addition, the rotation driving system can reliably detect the abnormal rotation of the stepping motor with the simple structure. This makes it possible to reduce the production cost. The rotation driving system is effective for use as a damper driving system in the automobile air conditioner. Since any additional interconnection wire need not be connected to the switch for detecting the rotating position of the stepping motor, the structure can be further simplified.

While the present invention has thus far been described in conjunction with a few embodiments thereof, it will be possible for those skilled in the art to put this invention into practice in various other manners. For example, although the fourth gear is used as the rotary member in the description, the damper or one of the other gears may be used as the rotary member. The switch may be connected to another line of the signal supplying lines.

## Claims

1. A rotation driving system comprising a stepping motor (2) supplied with a drive signal of pulses for producing rotation force in accordance with each of said pulses, a signal supplying line (11a) connected to said stepping motor (2) for supplying said drive signal to said stepping motor (2), a rotary member (6) connected to said stepping motor (2) for carrying out each of forward rotation and backward rotation in response to said rotation force, and monitoring means for monitoring said stepping motor (2) to produce a monitoring result signal, characterized in that said monitoring means comprises:
specifying means (6b) for specifying a specific position of said rotary member; and
a switch (7) connected to said signal supplying line and operatively coupled to said rotary member for detecting said specific position with said forward and said backward rotations to make said signal supplying line be opened whenever said switch detects said specific position.

2. A rotation driving system as claimed in claim 1, comprising:
line monitoring means (8) connected to said signal supplying line (11a) for monitoring said signal supplying line (11a) to produce a detection signal when said signal supplying line (11a) is opened; and/or
angle determining means (9) connected to said line monitoring means (8) for determining a rotation angle of said rotary member by the use of said detection signal; and/or
judging means (9) connected to said angle determining means (9) and supplied with said drive signal for counting said pulses within said rotation angle to judge with reference to the number of said pulses whether or not said stepping motor (2) is normal.

3. A rotation driving system as claimed in claim 2, wherein said judging means comprises:
first counting means (9) connected to said angle determining means (9) and supplied with said drive signal for counting said pulses during one of said forward and said backward rotations within said rotation angle to produce a first count value; and/or
second counting means (9) connected to said angle determining means (9) and supplied with said drive signal for counting said pulses during the other of said forward and said backward rotations within said rotation angle to produce a second count value; and/or
local judging means (9) connected to said first and said second counting means (9) for judging coincidence or incoincidence between said first and said second count values to produce said monitoring result signal.

4. A rotation driving system as claimed in claim 2 or 3, wherein said angle determining means (9) determines, as said rotation angle, a first rotation angle corresponding to a time interval which is between said detection signal and a selected one of said pulses.

5. A rotation driving system as claimed in one of claims 2 to 4, further comprising direction control means (9) connected to said stepping motor (2) and said angle determining means (9) for controlling operation of said stepping motor (2) to continuously carry out each of said forward and said backward rotations within said rotation angle.

6. A rotation driving system as claimed in claim 2 or 3, wherein said angle determining means (9) determines, as said rotation angle, a second rotation angle corresponding to a time interval which is between appearances of said detection signal.

7. A rotation driving system as claimed in one of claims 2 to 4, 6 further comprising direction control means (9) connected to said stepping motor (2) and said angle determining means (9) for controlling operation of said stepping motor (2) to mixedly carry out said forward and said backward rotations within said rotation angle.

8. A rotation driving system as claimed in one of claims 2 to 7, wherein said line monitoring means (8) comprises:
a pair of resistors (8a, 8b) connected in cascade to each other between said signal supplying line (11a) and ground; and
a detecting circuit (8c) connected to a junction between said resistors (8a, 8b) to produce said detection signal in response to an electric potential at said junction.
